# FASCICULE DE BREVET EUROPEEN

(11) **EP 0 388 253 B1**
(45) Date de publication et mention de la délivrance du brevet: **01.06.1994**
(21) Numéro de dépôt: 90400597.2
(22) Date de dépôt: 05.03.1990
(51) Int. Cl.: G21C 13/00

(54) **Piscine de manutention et de réserve d'eau de sécurité pour réacteur nucléaire refroidi à l'eau sous pression**
Belade- und Sicherheitswasservorlagebecken für einen Druckwasserkernreaktor
Refueling and security water pool for pressurized water cooled nuclear reactor

(30) Priorité: 07.03.1989 FR 8902967
(43) Date de publication de la demande: 19.09.1990
(73) Titulaire: COMMISSARIAT A L'ENERGIE ATOMIQUE, 75015 Paris Cédex 15 (FR)
(72) Inventeur: Costes, Didier, F-75116 Paris (FR)
(74) Mandataire: Dubois-Chabert, Guy

(56) Documents cités:
- DE-A- 2 315 289
- FR-A- 2 210 802
- FR-A- 2 300 400
- US-A- 3 752 738

## Description

L'invention concerne les réacteurs nucléaires du type à eau sous pression, comportant une cuve contenant le coeur nucléaire et munie d'un couvercle que l'on ouvre pour assurer le renouvellement des éléments combustibles du coeur. La cuve et le reste du circuit primaire sous pression où circule l'eau borée de refroidissement du coeur, sont contenus dans une enceinte de sécurité.

Pour compenser les variations de température et de volume de cette eau borée primaire, permettre au-dessus de la cuve le remplissage d'une piscine de déchargement assurant la protection nécessaire lors des opérations de renouvellement du combustible, et procurer une réserve d'eau de refroidissement à utiliser en cas d'accident sur le circuit primaire, on dispose généralement d'un réservoir d'eau borée qui, dans les installations existantes, est habituellement placé à l'extérieur de l'enceinte. Cette implantation a donc l'inconvénient de nécessiter le recours à un système de pompage pour la distribution de l'eau de refroidissement de secours.

Diverses dispositions ont été envisagées dans les dernières années pour modifier soit l'implantation, soit l'exploitation de ce réservoir d'eau.

On a proposé par exemple de le placer à l'intérieur de l'enceinte et de le faire servir au stockage du combustible usé, comme le préconise le brevet français n° EN 78 21 492 au nom du demandeur.

On a égalemente proposé, selon le document "The Westinghouse AP 600 passive safety systems - A key to a safer, simplified PWR" de L.E. CONWAY, conférence ANS de Seattle, Mai 1988, de le placer dans l'enceinte au-dessus du niveau du coeur nucléaire pour permettre un renoyage hydrostatique de celui-ci en cas d'accident, lorsque sa pression a suffisamment décru. Il n'est pas indiqué que ce réservoir serve au stockage du combustible. Un transfert d'eau est prévu entre ce réservoir et la piscine de déchargement que l'on remplit au-dessus de la cuve pour les opérations de renouvellement du combustible.

On sait par ailleurs que les piscines de déchargement comportent habituellement des murs-batardeaux qui peuvent être insérés dans des glissières verticales et séparer une piscine de forme générale allongée en trois compartiments, celui du milieu étant au-dessus de la cuve et devant être vide d'eau lorsque le couvercle de cuve y est présent. Le fonctionnement du réacteur avec ce compartiment vide mais les deux autres compartiments pleins d'eau n'est pas possible car l'étanchéité des batardeaux repose sur des joints souples gonflés et ne peut être assurée à long terme, alors que la face supérieure du couvercle de cuve et l'ensemble de contrôle et d'instrumentation fixé au-dessus doivent toujours rester à sec. Selon l'art actuel, les piscines de manutention du combustible, situées au-dessus du réacteur, sont donc complètement vidées pour le fonctionnement de celui-ci et ne peuvent servir de réservoir d'eau de refroidissement, en charge hydrostatique sur le coeur.

La présente invention a précisément pour objet une piscine de manutention pour réacteur nucléaire permettant le fonctionnement du réacteur avec un compartiment de piscine vide au-dessus de la cuve, le reste de la piscine restant plein d'eau et assurant la réserve d'eau nécessaire en cas d'accident, ce qui procure une économie d'encombrement et divers avantages qui seront exposés plus loin.

Cette piscine de manutention pour réacteur nucléaire refroidi à l'eau sous pression, du type de celles qui sont situées au-dessus du niveau du coeur du réacteur, se caractérise en ce qu'elle comporte, dans la zone au-dessus du couvercle du coeur, un batardeau amovible de forme approximativement cylindrique de révolution, de diamètre intérieur permettant le libre passage du couvercle de cuve, muni à sa base d'organes permettant son appui étanche sur le fond de la piscine autour de la cuve, ainsi que de moyens de remplissage et de vidange en eau.

Ce batardeau permet ainsi de garder à sec le couvercle de cuve et les mécanismes qui le surmontent. Lorsque le couvercle a été enlevé, il peut être rempli d'eau puis lui-même enlevé, les opérations étant inverses pour la remise en place du couvercle.

De façon plus précise, les organes permettant l'appui étanche du batardeau sur le fond de la piscine comportent une bride circulaire horizontale, avec une étanchéité de type classique, notamment à double joint avec aspiration de fuite entre les joints, ce qui élimine tout risque de fuite d'eau de la piscine vers le couvercle, contrairement aux étanchéités de l'art antérieur pour les batardeaux constitués de murs plans. Cette bride est serrée contre le fond de la piscine par des connecteurs amovibles tels que des vis manoeuvrables depuis le sommet du batardeau.

Concernant les réacteurs à eau sous pression, les précautions prises pour la cuve et les moyens de fixation de son couvercle sont très généralement estimées suffisantes pour qu'on n'ait pas à parer les conséquences d'une rupture de cuve. Dès lors que l'on veut prendre en compte des hypothèses extrêmement pessimistes, on peut installer d'une part un puits de cuve capable de confiner une explosion de cuve, d'autre part des moyens d'anti-envol du couvercle; de nombreuses propositions ont été faites en ce sens. Le réacteur à réserve d'eau au-dessus du coeur répondant à un souci particulier de sûreté, on s'est préoccupé de rendre ces moyens anti-envol compatibles avec la présence du batardeau cylindrique selon l'invention.

Selon donc une autre caractéristique de l'invention, le batardeau reçoit un premier moyen amovible de blocage vers le bas vis-à-vis du couvercle de cuve, et un second moyen amovible de blocage vers le haut vis-à-vis de l'ensemble des structures de génie civil du réacteur nucléaire, et plus particulièrement des murs de piscine, ce qui procure le blocage anti-envol du couvercle.

Selon une autre caractéristique de l'invention, ces moyens amovibles de blocage sont constitués par des butons obliques comportant chacun un ressort d'extension assurant le combat effectif des surfaces d'appui et un amortisseur hydraulique n'autorisant qu'un lent raccourcissement en cas d'application d'une force de compression. De cette manière, les efforts imposés en service normal du fait des diverses dilatations restent faibles et en particulier ne risquent pas de décoller le joint de batardeau. D'autre part, en cas d'accident de rupture de goujons d'ancrages du couvercle, il ne se produit pas de chocs mécaniques lors de la reprise de l'effort par les parois de piscine et la décharge du circuit primaire s'effectue d'une manière relativement contrôlée.

La masse d'eau disponible dans l'enceinte du réacteur, d'une part dans la piscine ainsi utilisable grâce à l'invention, d'autre part dans d'éventuels réservoirs supplémentaires, peut être telle que soit assuré après une grave rupture du circuit primaire le noyage de toutes les casemates qui contiennent le circuit, ce qui donne la certitude que le coeur nucléaire est finalement lui-même renoyé. Une quantité résiduelle d'eau dans la piscine peut être également assurée, ce qui permet d'utiliser pour le stockage du combustible usé un emplacement profond de cette piscine. Le batardeau selon l'invention permet finalement ainsi un stockage particulièrement économique et sûr du combustible usé, dans le cadre des réacteurs à "sûreté intrinsèque" largement étudiés par ailleurs.

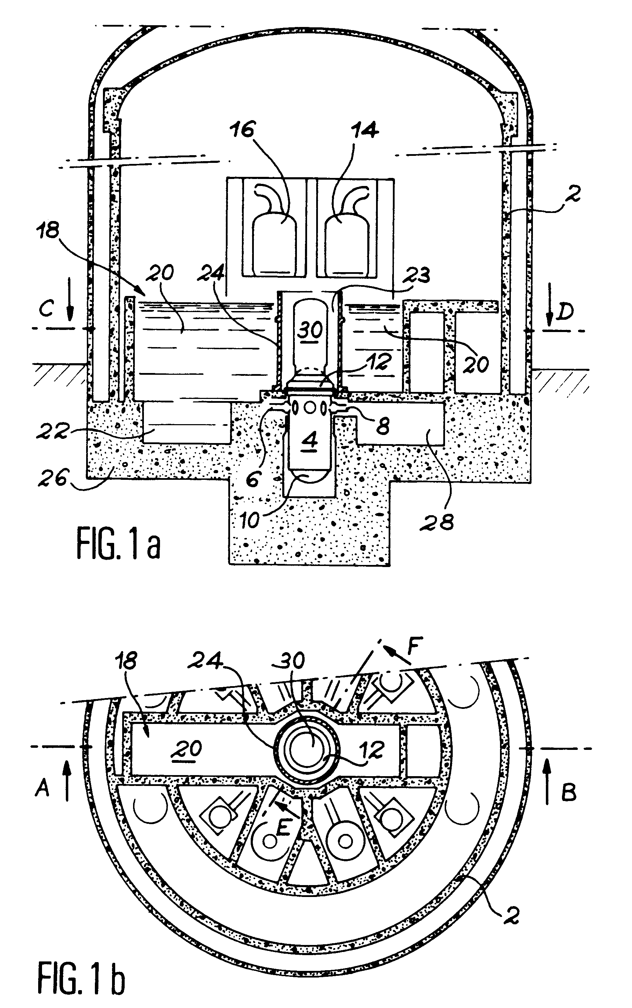

De toute façon, l'invention sera mieux comprise en se référant à la description qui suit d'un exemple de mise en oeuvre de la piscine de manutention et de réserve d'eau pour réacteur nucléaire refroidi sous pression, description qui sera faite sutout à titre illustratif et non limitatif en se référant aux figures 1 à 3, sur lesquelles :
- la fig. 1a montre en coupe élévation selon le plan vertical A-B de la fig. 1b d'une centrale nucléaire dans son enceinte de béton avec le coeur et la piscine objet de l'invention ;
- la fig. 1b est une vue de dessus d'une coupe horizontale selon C-D de l'installation de la fig. 1a ;
- la fig. 2 montre à une échelle plus grande, les détails technologiques de mise en place d'un batardeau selon l'invention, cette figure 2 étant une coupe verticale en élévation selon la ligne E-F de la fig. 1b.
- la fig. 3 est une vue en coupe d'un buton amovible de blocage.

Sur la fig. 1a on retrouve en coupe les éléments classiques connus d'une centrale nucléaire refroidie à l'eau sous pression. Dans une enceinte en béton 2, se trouve le réacteur proprement dit 4 avec ses entrées et sorties d'eau primaire 6 et 8, ainsi que la cuve 10 munie de son couvercle 12. On a également figuré schématiquement la piscine 20 et les générateurs de vapeur 14 et 16 situés au-dessus du réacteur nucléaire 4. La figure 1b portant les mêmes nombres de référence, permet de voir la forme générale allongée de la piscine 18.

Au-dessus de la cuve 10 est implantée comme selon l'art antérieur une piscine 20 servant à la manutention du combustible nucléaire, l'eau assurant la protection biologique des opérateurs et le refroidissement des éléments combustibles retirés du coeur nucléaire, qui continuent à dégager un flux de chaleur important. Cette piscine pouvant, grâce à l'invention, être maintenue pleine d'eau pendant la marche du réacteur, elle est ici utilisée comme réserve d'eau à utiliser en cas de rupture du circuit primaire et de risque d'assèchement du coeur selon des moyens qui ne font pas partie de l'invention. Sa région 22 à grande profondeur est utilisée pour le stockage à moyen terme des éléments combustibles usés, par exemple pendant deux ans, les flux thermique et radioactif de ces éléments ayant alors suffisamment décru pour permettre leur évacuation par des moyens relativement simples. Le batardeau 24 selon l'invention permet de maintenir à sec le couvercle 12 du réacteur et les mécanismes supérieurs figurés par le volume 30. Pour l'ouverture du couvercle, on réduit d'abord la pression d'eau dans le circuit primaire pour obtenir la pression atmosphérique au niveau du joint de couvercle puis on retire les goujons de fixation. A mesure que le couvercle est soulevé jusqu'à sortir du puits de batardeau, celui-ci est alimenté en eau, soit en provenance du circuit primaire, soit par un apport direct d'eau de piscine dans le batardeau. Le couvercle étant évacué vers une aire de stockage et les niveaux étant égalisés, on peut détacher le batardeau du fond de piscine et l'évacuer vers une autre aire de stockage, ce qui permet les opérations sde déchargement du réacteur. Les opérations sont inverses pour la refermeture du couvercle.

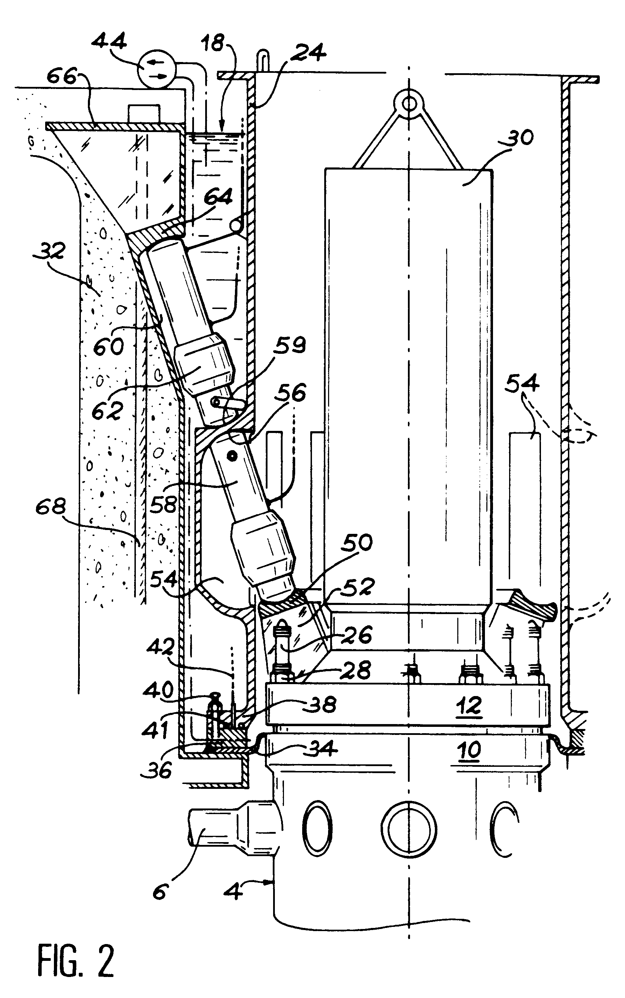

En se référant maintenant à la figure 2, on va décrire de façon plus précise le moyen essentiel de l'invention qui est le batardeau 24 entourant de façon circulaire la partie supérieure du couvercle 12 et muni de moyens d'étanchéité pour permettre, sans vider la piscine 20, de maintenir à sec la zone située au-dessus du réacteur 4.

Sur cette figure 2, on a représenté partiellement la coupe 32 des parois de la piscine 18 entourant la partie supérieure du réacteur 4. La cuve 4 du réacteur comporte une bride 10 de fixation du couvercle 12 par l'intermédiaire de goujons tels que 26, qui sont allongés au-dessus de l'écrou 28 de serrage pour faciliter leur mise en tension. La bride 10 est reliée au fond de piscine en périphérie par un soufflet métallique 34 conforme à l'art antérieur, pour que l'eau ne pénètre pas autour de la cuve. Ce soufflet aboutit ici à une portée métallique usinée 36 soudée au fond de piscine autour de la cuve, et qui permet l'appui du batardeau 24, par l'intermédiaire de sa bride 38, serrée sur la portée par des vis telles que 40, et portant deux joints d'étanchéité 41 et un dispositif d'aspiration de fuite 42. Cette liaison est d'un type assurant une excellente fiabilité et l'on peut être certain que l'eau de piscine ne parviendra pas au couvercle de cuve par fuite de cette liaison. Le batardeau 24 peut être utilisé comme il a été décrit plus haut pour les opérations sur le combustible. On a figuré schématiquement un moyen de pompage 44 permettant de régler la hauteur d'eau à l'intérieur du batardeau.

On décrira maintenant le perfectionnement facultatif de l'invention, visant à bloquer l'envol du couvercle dans l'hypothèse d'une rupture en chaîne des goujons 26. La force d'envol peut être évaluée comme le produit de la surface d'ouverture du couvercle, soit environ 18 m² pour un réacteur de 1300 MWe, par la pression de vapeur saturante de l'eau primaire, soit 12,5 MPa pour 328°C au-dessus du coeur, c'est-à-dire 175 MN (ou environ 17500 tonnes). Les éléments de blocage doivent s'interposer entre la face supérieure du couvercle et les deux longs murs de la piscine; en fonctionnement normal du réacteur, ils ne doivent pas entraver la libre dilatation du batardeau 24. On utilise selon l'invention :
- au-dessus du couvercle, un anneau de répartition 50 prenant appui sur la surface même du couvercle au moyen d'un ensemble soudé de voiles radiaux 52 s'interposant entre les surlongueurs des goujons 26 et leurs écrous, sans les toucher,
- entre l'anneau 50 et les mèches 54 dans la paroi du batardeau, formant des redans d'appui 56, un premier ensemble de butons obliques tels que 58, normalement en légère compression sous l'influence d'un ressort mais susceptibles de résister à une compression brutale, comme il sera décrit plus loin,
- entre le batardeau 24 et des niches 60 dans les murs 32 de piscine, un deuxième ensemble de butons tels que 62, analogues aux précédents, prennent apppui sur des redans 59 du batardeau au-dessus des niches 54 qui forment des saillies sur la surface externe du batardeau.

Les niches 60 dans les murs de piscine comportent des plages d'appui métalliques 64 pour les butons 62, reliées par des structures mécanosoudées à des plaques de répartition 66 pour des armatures de précontrainte telles que 68, qui s'ancrent en profondeur dans le radier du bâtiment.

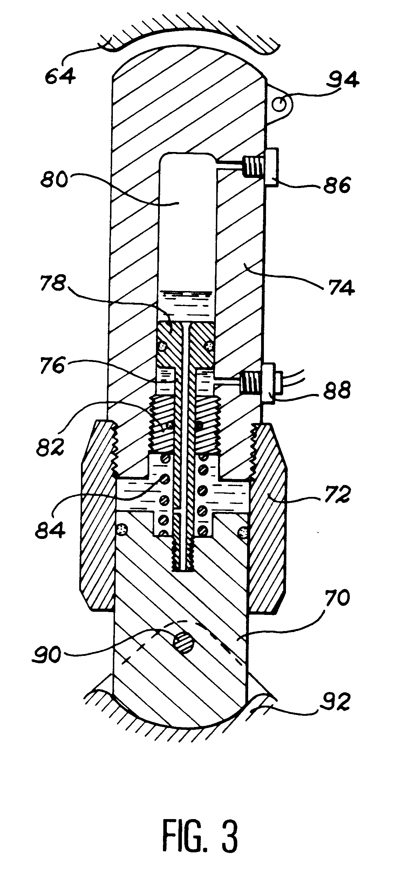

On décrira en s'aidant de la figure 3, un type de buton convenant pour le second ensemble, assurant le blocage entre le batardeau et les murs. Si l'on utilise par exemple 12 butons dans chaque ensemble, la force à buter atteint environ 15 MN, tandis que le débattement à prévoir pour les dilatations, les tolérances, et le retrait nécessaire à la mise en place, est de l'ordre de 40 mm. Le buton comporte un piston inférieur 70 coulissant dans un cylindre 72 solidaire d'une tige supérieure 74; le piston 70 est lié par un tube 76 à un petit piston 78 coulissant dans un chambrage 80 de la tige 74, le tube 76 coulissant dans une bague 82 solidaire du tube 76. Un ressort 84 tend à maintenir un écart entre le piston 70 et la tige 74. Le filetage de liaison entre le tube 76 et le piston 70 n'est pas étanche et permet à un liquide enfermé entre le piston 70 et la tige 74 de s'échapper à faible débit vers la partie supérieure du chambrage 80, qui est muni d'une purge normalement fermée 86. L'espace annulaire entre le petit piston 78 et la bague 82 peut recevoir par le flexible amovible 88 une injection de liquide qui permet de rétracter le buton en comprimant le ressort 84, pour permettre la mise en place ou l'enlèvement du buton. Le buton est retenu en bas de manière lâche par une articulation 90 qui le positionne devant sa face d'appui 92, tandis qu'une commande supérieure 94 le positionne devant sa face d'appui 64. Un tel buton est ainsi rétracté à la verticale contre le batardeau 24 pour la manutention de celui-ci, et déployé obliquement pour le fonctionnement du réacteur.

Les butons du premier ensemble peuvent être analogues, pour la manutention, ils peuvent rester solidaires soit de l'anneau 50, soit du batardeau 24, leur articulation lâche analogue à 90 étant alors disposée au sommet, comme indiqué sur la figure 2.

Lorsqu'un tel buton est brutalement comprimé, le liquide interposé entre le piston 70 et la tige 74 ne s'échappe qu'à faible débit dans le chambrage 80, où il comprime de l'air, et le choc de compression est ainsi transmis sans jeu, finalement à des armatures de précontrainte solidaires de l'ensemble du bâtiment.

L'ensemble des éléments de cette chaîne de résistance, du couvercle au bâtiment, peut être dimensionné pour résister aux efforts requis. On remarque que, dans les réacteurs "à sûreté intrinsèque" dont il a été question, le circuit primaire est contenu dans des casemates de volume relativement petit, qui peuvent être très robustes et contenir les effets vers les murs d'une explosion de cuve; le dispositiff anti-envol correspond alors à une homogénéisation de la sûreté.

Pour ouvrir la cuve après fonctionnement du réacteur, on doit finalement :
- rétracter les butons du premier ensemble et les ramener verticalement dans les niches 54 (éventuellement les enlever séparément),
- extraire l'anneau 50 et ses voiles de répartition, éventuellement en plusieurs segments,
- dévisser les goujons de cuve et extraire le couvercle de cuve (après avoir procédé aux diverses déconnexions habituelles),
- le cas échéant faire monter l'eau dans le batardeau à mesure que le couvercle est extrait; achever l'égalisation des niveaux d'eau entre batardeau et piscine,
- rétracter les butons du deuxième ensemble et les ramener verticalement contre la paroi du batardeau,
- dévisser les vis 40 et extraire le batardeau.

Les manoeuvres sont évidemment inverses pour refermer la cuve.

En résumé, on peut escompter que la piscine objet de l'invention a les avantages suivants :
- permettre d'implanter la réserve d'eau borée à l'intérieur de l'enceinte et au-dessus de la cuve, ce qui améliore la protection en cas de rupture primaire, avec le minimum de coût et de complication puisqu'on utilise la piscine de déchargement ;
- permettre le stockage du combustible usé dans la piscine à l'intérieur de l'enceinte, pendant un à deux ans par exemple, ce qui permet de le transporter ensuite dans des conteneurs relativement simples vers un lieu de stockage centralisé pour plusieurs réacteurs. Les risques liés au stockage hors enceinte d'éléments usés très actifs sont ainsi supprimés, et l'économie est améliorée ;
- utiliser le batardeau cylindrique comme structures de blocage en cas d'envol du couvercle de cuve et apporter ainsi une sécurité supplémentaire, bien que l'accident envisagé soit de probabilité très faible.

## Revendications

1. Piscine de manutention du combustible pour réacteur nucléaire refroidi à l'eau sous pression, du type de celles qui sont situées au-dessus du niveau du coeur du réacteur, caractérisée en ce qu'elle comporte, directement au-dessus de la cuve (4) du coeur, un batardeau amovible (24), de forme approximativement cylindrique de révolution, de diamètre intérieur permettant le libre passage vers le haut du couvercle (12) de la cuve et des mécanismes qui le surmontent, muni à sa base d'organes (38, 40, 41, 42) permettant son appui étanche sur le fond de la piscine (20) autour du couvercle (12) de la cuve, ainsi que de moyens de remplissage et de vidange en eau (44), et délimitant, dans la partie de la piscine située au-dessus du coeur un espace (23) sec lorsque le couvercle s'y trouve présent, notamment pendant le fonctionnement du réacteur.

2. Piscine selon la revendication 1, caractérisée en ce que le batardeau (24) comporte sur le fond de piscine une bride d'appui (38) circulaire et horizontale munie de deux joints d'étanchéité (41) en série et d'un dispositif d'aspiration de fuite, cette bride étant serrée sur une portée plane (36) par des vis (40).

3. Piscine selon la revendication 1 ou 2, caractérisée en ce que le batardeau (24) comporte des premiers moyens (58) amovibles de blocage vertical entre le couvercle de cuve (12) et sa partie inférieure et des seconds moyens amovibles de blocage (62) vertical entre sa partie supérieure et les structures fixes de la piscine.

4. Piscine selon la revendication 3, caractérisée en ce que les premiers moyens de blocage sont constitués par des butons obliques amovibles (58) munis d'un amortisseur hydraulique, d'un ressort d'extension et d'un vérin de retrait, coopérant avec un anneau de répartition (50) posé sur le couvercle de cuve et avec des redans d'appui (56) dans la paroi du batardeau.

5. Piscine selon la revendication 3 ou 4, caractérisée en ce que les seconds moyens de blocage sont constitués de butons obliques amovibles (62) munis d'un amortisseur hydraulique, d'un ressort d'extension et d'un vérin de retrait, coopérant avec des redans d'appui (59) sur la paroi externe du batardeau et avec des redans (64) ménagés dans la paroi (32) de piscine.

6. Piscine selon l'une quelconque des revendications 1 à 5, caractérisée en ce qu'elle comporte en outre, logé dans la masse de béton (26) constituant le fond de l'enceinte et sous le niveau du couvercle (12) de la cuve du réacteur, un compartiment (22) réservé au stockage du combustible usagé.

## Patentansprüche

1. Belade- und Sicherheitswasservorlagebecken für einen Druckwasserkernreaktor von der Bauart derer, die sich über dem Niveau des Reaktorkerns befinden,
dadurch **gekennzeichnet**,
daß es, direkt über dem Kernbehälter (4), eine lösbare Abdämmung (24) enthält, annähernd rotationszylinderförmig mit einem Innendurchmesser, der den freien Durchgang des Behälterdeckels (12) und der auf diesem angeordneten Einrichtungen nach oben zuläßt, die an ihrer Basis mit Organen (38, 40, 41, 42) versehen ist, die ihren dichten Sitz auf dem Boden des Beckens (20) gewährleisten, um den Behälterdeckel (12) herum, sowie Einrichtungen zum Einfüllen und Entleeren von Wasser (44), und die in dem über dem Kern befindlichen Teil des Beckens einen trockenen Raum abgrenzt, wenn der Deckel sich dort befindet, vor allem während des Betriebs des Reaktors.

2. Becken nach Anspruch 1, dadurch gekennzeichnet, daß die Abdämmung (24) am Boden des Beckens einen Befestigungsflasch (38) aufweist, kreisförmig und horizontal, versehen mit zwei Dichtungen (41) in Reihe und einer Leckage-Absaugvorrichtung, wobei dieser Flansch festgeschraubt ist auf einer ebenen Auflagefläche (36) mittels Schrauben (40).

3. Becken nach Anspruch 1 oder 2, dadurch gekennzeichnet, daß die Abdämmung (24) erste lösbare Vertikalblockierungseinrichtungen (58) zwischen dem Behälterdeckel und ihrem Unterteil enthält und zweite lösbare Vertikalblockierungseinrichtungen (62) zwischen ihrem Oberteil und den festen Strukturen des Beckens.

4. Becken nach Anspruch 3, dadurch gekennzeichnet, daß die ersten Blockierungseinrichtungen gebildet werden durch lösbare schräge Knöpfe (58), versehen mit einem hydraulischen Dämpfer, einer Druckfeder und einem Rückzugzylinder, zusammenwirkend mit einem Verteilring (50), angeordnet auf dem Behälterdeckel, und mit Stützabsätzen (56) in der Wandung der Abdämmung.

5. Becken nach Anspruch 3 oder 4, dadurch gekennzeichnet, daß die zweiten Blockierungseinrichtungen gebildet werden durch lösbare schräge Knöpfe (62), versehen mit einem hydraulischen Dämpfer, einer Druckfeder und einem Rückzugzylinder, zusammenwirkend mit Stützabsätzen (59) auf der Außenwand der Abdämmung und mit Absätzen (64), angebracht in der Beckenwand (32).

6. Becken nach einem der Ansprüche 1 bis 5, dadurch gekennzeichnet, daß es außerdem eine für die Lagerung der verbrauchten Brennstäbe reservierte Abteilung (22) umfaßt, ausgeformt in der den Boden des Beckens bildenen Betonmasse (26) und unter dem Niveau des Reaktorbehälterdeckels (12).

## Claims

1. Handling pool for fuel in a pressurized water-cooled nuclear reactor, of the type located above the reactor core level, characterized in that it comprises, directly above the core vessel (4), an approximately cylindrical of revolution detachable bulkhead (24), whose internal diameter permits the free passage to the top of the vessel cover (12) and the mechanism surmounting the same, which is provided at its base with means (38, 40, 41, 42) permitting its tight bearing on the bottom of the pool (20) around the vessel cover (12), as well as means (44) for filling and emptying water, and defining in the part of the pool located above the core, a dry space (23) when the cover is present there and in particular when the reactor is operating.

2. Pool according to claim 1, characterized in that the bulkhead (24) has on the bottom of the pool a circular, horizontal bearing flange (38) provided with two gaskets or packings (41) in series and a leak suction device, said flange being fixed to a planar bearing (36) by screws (40).

3. Pool according to claims 1 or 2, characterized in that the bulkhead (24) comprises first detachable, vertical locking means (58) between the vessel cover (12) and its lower part and second detachable, vertical locking means (62) between its upper part and the fixed structures of the pool.

4. Pool according to claim 3, characterized in that the first locking means are constituted by detachable oblique members (58) provided with a hydraulic shock absorber, an extension spring and a jack, cooperating with a distribution ring (50) placed on the vessel cover and with bearing steps (56) in the bulkhead wall.

5. Pool according to claims 3 or 4, characterized in that the second locking means are constituted by detachable oblique members (62) provided with a hydraulic shock absorber, an extension spring and a jack, which cooperate with bearings steps (59) on the outer wall of the bulkhead and with steps (64) in the pool wall (32).

6. Pool according to claim 1, characterized in that it also comprises, located in the concrete mass (26) constituting the bottom of the enclosure and beneath the level of the reactor vessel cover (12), a copartment (22) reserved for the storage of spent fuel.
